# EUROPEAN PATENT SPECIFICATION

(11) **EP 1 525 252 B1**
(45) Date of publication and mention of the grant of the patent: **16.08.2006**
(21) Application number: 03736839.6
(22) Date of filing: 05.06.2003
(51) Int. Cl.: C08J 7/18, C09D 11/10

(54) **METHODS OF MAKING WEATHERABLE FILMS AND ARTICLES**
HERSTELLUNGSVERFAHREN VON WETTERFESTEN FOLIEN UND GEGENSTÄNDEN
PROCEDES DE FABRICATION DE FILMS ET D'ARTICLES RESISTANTS AUX INTEMPERIES

(30) Priority: 02.08.2002 US 211027
(43) Date of publication of application: 27.04.2005
(73) Proprietor: 3M Innovative Properties Company, St. Paul, Minnesota 55133-3427 (US)
(72) Inventor: HUNT, William, J., Saint Paul, MN 55133-3427 (US); KETOLA, Warren, D., Saint Paul, MN 55133-3427 (US); PAVELKA, Lee, A., Saint Paul, MN 55133-3427 (US); SEVERANCE, Richard, L., Saint Paul, MN 55133-3427 (US)
(74) Representative: Vossius & Partner
(86) International application number: PCT/US2003/017627
(87) International publication number: WO 2004/013213

(56) References cited:
- US-A- 5 981 113
- US-A1- 2002 086 914
- US-B1- 6 265 061

## Description

### Background

The present invention relates to methods of making coated, weather resistant polymer films.

Polymer films, particularly those made of poly(methylmethacrylate) (PMMA) and poly(vinylchloride) (PVC) have been used to make constructions having outdoor durability. Such constructions have been used for a variety of applications such as traffic and architectural signage, vehicle marking, and license plates. Typically, these polymer films are usually coated or printed in portion with ink or other coating. Ideally, these printed or coated polymer films have a useful life of several months to ten years or even longer. Each component of the construction must be able to withstand potentially damaging elements such as sunlight, rain, wind, and other environmental elements.

Ultraviolet (UV) light-cured inks and coatings are growing in popularity due to increased speeds of coating or printing on such films and the belief that cured or crosslinked coatings are more durable than other conventional coatings or inks. Typically, these materials are formulated to balance the qualities of "through cure" and "surface cure." "Through cure" refers to a fairly uniform reactivity throughout the thickness of the coating and is most affected by wavelengths of about 320 to about 380 nm. "Surface cure" refers to extensive reaction near or at the coating surface and is most affected by wavelengths of about 240-270 nm. The balance between both types of cure is accomplished through formulations having a balanced mixture of photoinitiators and using UV-light sources that provide a broad spectrum of UV-light at effective intensities. Typically, such broad UV-light spectra at effective intensities can be provided by medium pressure mercury lamps.

### Summary

In pursuit of making more durable signage through the use of UV-curable inks or compositions, Applicants have discovered that exposure of a polymer film substrate to UV-light during a conventional UV-curing process causes or may cause the exposed polymer film to degrade over a relatively short period of time. However, surprisingly, evidence of such film degradation is not immediately apparent; uncoated portions of the polymer films exposed to UV-light during a UV-curing process develop a cloudy appearance within a period of about four years when exposed to sunlight and other elements.

The novel method of making coated polymer films according to the present invention eliminates the above-noted problems of conventional polymer films by exposing the coated polymer film to an effective amount of UV-light substantially free of wavelengths of from about 230 nm to about 265 nm, and which is sufficient to cure a UV-curable composition on a portion of an outer surface of the polymer film, yet does not negatively impact the uncoated portions of the polymer film. The resulting coated polymer film possesses superior weatherability when compared to coated polymer films prepared in a conventional manner.

As used herein, an "effective amount" refers to a total dose of radiation delivered at a given intensity sufficient to cure the UV-curable composition.

"Substantially free of wavelengths from about 230 nm to about 265 nm" means the photon intensity in the wavelength region is not detectable using an EIT Uvicure Power Puck (EIT Inc., Sterling, VA) integrating radiometer.

As used herein, "polymeric film" means a polymeric film that shows a decrease in weathering performance when exposed to a weatherability test after being exposed to an effective amount of full spectrum UV-light relative to conventional cure of a UV-curable composition.

As used herein, "UV-A" means wavelengths of from about 320 nm to about 400 nm, peak of 370 nm; "UV-B" means wavelengths from about 275 nm to about 320 nm, peak of 305 nm; and "UV-C" means wavelengths of from about 230 nm to about 265 nm, peak of 250 nm.

Accordingly, the present invention is directed to a method of making coated polymer films, wherein the method of making comprises the steps of coating at least a portion of an outer surface of a polymer film with a UV-light curable ink composition, and exposing the coated outer surface of the polymer film to an effective amount of UV-light devoid of certain wavelengths. The dose of UV-light is sufficient to cure the UV-light curable composition, yet does not negatively impact the uncoated portions of the polymer film.

The present invention is further directed to articles of manufacture containing the coated polymer films made by the process described above.

These and other features and advantages of the present invention will become apparent after a review of the following detailed description of the disclosed embodiments and the appended claims.

### Detailed Description

The present invention is directed to methods of making coated polymeric films having superior weatherability. The resulting coated polymeric films retain a desirable surface appearance even after exposure to accelerated weathering conditions for a period of at least about 2000 hours. The components of the polymeric films are selected, assembled, and processed in such a way that the resulting film has desirable weatherability properties.

In one embodiment, the present invention provides a method which comprises the steps of coating a first outer surface of a polymeric film with a UV-curable composition to form a polymeric film having one or more uncoated areas and one or more coated areas; and exposing the first outer surface to an effective amount of UV-light for curing the UV-curable composition, wherein the UV-light is substantially free of wavelengths that would negatively affect the surface properties and weatherability of the uncoated areas of the film.

The polymeric film may be coated with a UV-curable composition using one or more coating steps and coating processes. Suitable coating processes include, but are not limited to, brush painting, spray painting, thermal transfer printing, drawing, screen printing, flexo printing, inkjet printing, transfer coating, gravure coating, slot coating, curtain coating, lithographic printing, and combinations thereof. Desirably, the coating process comprises one or more printing steps comprising screen printing, flexo printing, ink jet printing, or a combination thereof.

Any conventional coating apparatus may be used to apply a light-curable composition onto a surface of the polymeric film. Suitable coating apparatus include, but are not limited to, paint brushes, paint sprayers, writing instruments (that is, pens, markers, etc.), screen printers, flexo printers, piezo ink jet printers, thermal ink jet printers, and transfer coating equipment.

The amount of UV-curable composition applied to one or more coated areas of an outer surface of the polymeric film may vary depending on a number of factors including, but not limited to, the particular coating method, the particular coating composition applied, and the end use of the coated polymeric film. Typically, the amount of coating applied to one or more coated areas of an outer surface of the polymeric film is from about 0.1 grams per square meter (gsm) to about 200 gsm based on the surface area of the coated area. However, any amount of coating may be used as long as the coating forms a desired coating in the one or more coated areas.

Once the polymeric film is coated with a UV-light curable composition, the coated surface of the film is exposed to an effective amount of UV-light substantially free of wavelengths that would negatively impact the weatherability of the uncoated areas of the film for curing the UV-curable composition. Typically, an effective amount of light needed to cure a UV-light curable composition ranges from about 100 mJ/cm² UV-A to about 3000 mJ/cm² UV-A.

The wavelengths of the light used to cure the UV-curable composition may vary depending upon a number of factors including, but not limited to, the type of polymeric film. In other words, for a given polymeric film, a particular range of damaging wavelengths may be either not present from the source or removed from the light source in order to provide a coated polymeric film having superior weatherability properties. For example, in the case of films comprising acrylic resins, for example, copolymers of methyl methacrylate, it is desirable to not provide or to remove light having a wavelength of less than about 280 nm. In another example, in the case of films comprising a vinylchloride resin such as poly(vinylchloride), wavelengths of less than about 280 nm should not be present in the UV-light. For other polymeric films, the light may have a different range of wavelengths not present or otherwise removed from the light source.

One method of removing certain wavelengths from UV-light is by filtering. Useful filtering media may vary depending upon a number of factors including, but not limited to, the polymeric film material, and the wavelengths to be removed from the light spectrum. Suitable filtering media include, but are not limited to, a piece of double strength Soda-Lime window glass, available from Coming, Inc., Coming, NY, and having a thickness of about 0.125 inch (0.32 cm), which removes both UV-B (275-320 nm, peak 305 nm) and UV-C (230-265 nm, peak 250 nm) bands from the illumination spectrum; and PYREX® 7740 and COREX® 7058, both of which are available from Coming Inc., Coming, NY, which remove only the UV-C band photons from the illumination spectrum with a slight drop in the UV-B band intensity.

In a further embodiment of the present invention, the above-described method may further comprise attaching one or more substrates to a second outer surface of the polymeric film, wherein the second outer surface is opposite the first outer surface. The one or more substrates may be attached to the polymeric film by any conventional method of attaching including, but not limited to, adhesion, lamination, stitching, and mechanical fasteners, such as rivets, etc. Desirably, the one or more substrates are adhesively attached to the polymeric film. Suitable substrates for attaching to the polymeric film include, but are not limited to, a film, such as a polymeric film; a metal foil or sheet; any paper product; any wood product, such as plywood and fiberboard; other building products, such as gypsum board, concrete, and foamboard; a foam sheet; any type of fabric including woven fabrics, nonwoven fabrics, and knitted fabrics; or a combination thereof.

The polymeric material may be any commercially available polymer or copolymer in film form. Examples include films comprising acrylic resins including polymers and copolymers of methyl methacrylate and films comprising a vinylchloride resin such as PVC. An "acrylic resin" is a thermoplastic polymer or copolymer of: acrylic acid, methacrylic acid, esters of acrylic acid, esters of methacrylic acid, or acrylonitrile.

The polymeric film layer may comprise up to about 50 weight percent, desirably, up to about 10%, of various additives such as fillers, ultraviolet (UV) stabilizers, plasticizers, tackifiers, flow control agents, adjuvants, impact modifiers, expandable microspheres, thermally conductive particles, electrically conductive particles, and the like, such as silica, glass, clay, talc, pigments, colorants, glass beads or bubbles, and antioxidants, so as to reduce the weight and/or cost of the film layer, adjust viscosity, and/or provide additional reinforcement or modify the thermal conductivity of the film layer.

The polymeric film may be at least partially coated with any UV-light curable composition. Suitable UV-light curable compositions include, but are not limited to, UV-light curable ink compositions disclosed in U.S. Patent Publication No. 02-0086914-Al (Lee et al.); and U.S. Patent Nos. 6,5587,5309 (Ylitalo et al.) and 6,467,897 (Wu et al.).

At least a portion of one outer surface of the polymeric film is coated with a UV-light curable composition, desirably a UV-light curable ink composition. The resulting coated polymeric film has at least one outer surface with one or more uncoated areas and one or more coated areas. It should be noted that the coated polymeric film may also have one or more coated areas on the one outer surface, wherein the one or more coated areas are coated with a coating material other than the UV-light curable composition. The surface area occupied by the one or more uncoated areas of the outer surface may vary depending on the end use of the coated polymeric film. Desirably, the one or more uncoated areas occupy from about 1 to about 99% of the total surface area of the one outer surface. The resulting coated polymeric films have exceptional weatherability compared to coated polymeric films made by conventional methods (that is, exposed to a full spectrum of light).

One method of measuring the weatherability of coated polymeric films is by monitoring the gloss retention of the uncoated portions of the film after subjecting the film to an accelerated weathering protocol, such as ASTM G 154-00a, Cycle 2 or to an outdoor weathering protocol such as ASTM G 7.

In one embodiment of the present invention, the one or more uncoated areas of the coated acrylic resin film have a retained 60° gloss value of at least 90% of an initial 60° gloss value after exposure to accelerated weathering protocol ASTM G 154-00a, Cycle 2 for about 2000 hours. Desirably, the one or more uncoated areas of the coated acrylic resin film have a retained 60° gloss value of at least 95, 96, 97, 98, or 99% of the initial 60° gloss value after exposure to accelerated weathering protocol ASTM G 154-00a, Cycle 2 for about 2000 hours.

In one embodiment of the present invention, the one or more uncoated areas of a coated PVC film have a retained 60° gloss value of at least 80% of an initial 60° gloss value after exposure to accelerated weathering protocol ASTM G 154-00a, Cycle 2 for about 2500 hours. Desirably, the one or more uncoated areas of the coated PVC film have a retained 60° gloss value of at least 85, 90, 91, 92, 93, 94, 95, 96, 97, 98, or 99% of the initial 60° gloss value after exposure to accelerated weathering protocol ASTM G 154-00a, Cycle 2 for about 2500 hours.

In a further embodiment of the present invention, the one or more uncoated areas of the coated acrylic resin film have a retained 60° gloss value of at least 90% of an initial 60° gloss value after exposure to outdoor weathering protocol ASTM G 7 for 365 days. Desirably, the one or more uncoated areas of the coated acrylic resin film have a retained 60° gloss value of at least 95, 96, 97, 98, or 99% of the initial 60° gloss value after exposure to outdoor weathering protocol ASTM G 7 for 365 days.

Another method of measuring the weatherability of coated polymer films that are the exposed surface of a retroreflective article is by monitoring the retroreflectivity retention of the uncoated portions of the article after subjecting the article to an accelerated weathering protocol, such as ASTM G 154-00a, Cycle 2 or to an outdoor weathering protocol such as ASTM G 7.

In a further embodiment of the present invention, the one or more uncoated areas of the coated acrylic resin film of a retroreflective construction have a retroreflectivity value of at least 95% of an initial retroreflectivity value after exposure to accelerated weathering protocol ASTM G 154, Cycle 2 or for about 2000 hours. Desirably, the one or more uncoated areas of the coated acrylic resin film have a retroreflectivity value of at least 96, 97, 98, or 99% of an initial retroreflectivity value after exposure to accelerated weathering protocol ASTM G 154-00a, Cycle 2 for about 2000 hours.

In a further embodiment of the present invention, the one or more uncoated areas of the coated PVC film of a retroreflective construction have a retroreflectivity value of at least 80% of an initial retroreflectivity value after exposure to accelerated weathering protocol ASTM G 154-00a, Cycle 2 for about 2500 hours. Desirably, the one or more uncoated areas of the coated PVC film have a retroreflectivity value of at least 85, 90, 91, 92, 93, 94, 95, 96, 97, 98, or 99% of an initial retroreflectivity value after exposure to accelerated weathering protocol ASTM G 154-00a, Cycle 2 for about 2500 hours.

In a further embodiment of the present invention, the one or more uncoated areas of the coated PVC film have a % retained 60° gloss value of at least 80% of an initial 60° gloss value after exposure to outdoor weathering protocol ASTM G 7 for 365 days. Desirably, the one or more uncoated areas of the coated PVC film have a retroreflectivity value of at least 85,90, 91, 92, 93, 94, 95, 96, 97, 98, or 99% of an initial % retained 60° gloss value after exposure to outdoor weathering protocol ASTM G 7 for 365 days.

In a further embodiment of the present invention, the one or more uncoated areas of the coated acrylic resin film of a retroreflective construction have a retroreflectivity value of at least 90% of an initial retroreflectivity value after exposure to outdoor weathering protocol ASTM G 7 for 365 days. Desirably, the one or more uncoated areas of the coated acrylic resin film have a retroreflectivity value of at least 91, 92, 93, 94, 95, 96, 97, 98, or 99 % of an initial retroreflectivity value after exposure to outdoor weathering protocol ASTM G 7 for 365 days.

In a further embodiment of the present invention, the one or more uncoated areas of the coated PVC film of a retroreflective construction have a retroreflectivity value of at least 80% of an initial retroreflectivity value after exposure to outdoor weathering protocol ASTM G 7 for 365 days. Desirably, the one or more uncoated areas of the coated PVC film have a retroreflectivity value of at least 85, 90, 91, 92, 93, 94, 95, 96, 97, 98, or 99% of an initial retroreflectivity value after exposure to outdoor weathering protocol ASTM G 7 for 365 days.

The coated polymeric films of the present invention may be combined with one or more additional layers to form a variety of articles. Suitable additional layers are described above and include, but are not limited to, films, metal foils or sheets, paper products, wood products, gypsurn board, concrete, foamboard, foam sheets, any type of fabric, and combinations thereof.

The present invention is described above and further illustrated below by way of examples, which are not to be construed in any way as imposing limitations upon the scope of the invention.

### TEST METHODS

### ASTM G 154-OOa, Cycle 2

Sample panels were exposed to ASTM Test Method G 154-00a, Cycle 2 using a fluorescent UV-light, and water apparatus as described in the test method.

Prior to exposure, initial 60° gloss values were measured on each panel. Gloss measurements were conducted according to ASTM D 523. The initial 60° gloss value for each panel was used as the initial gloss for calculating gloss retention. Subsequent 60° gloss values were measured on each panel after each exposure increment.

Further, prior to exposure, retroreflectance values were measured on each panel according to ASTM E 810. Geometries used for measuring the retroreflectance of each panel are given below:

| | |
|---|---|
| Entrance Angle: | -4° |
| Observation Angle: | 0.2° |
| Orientation Angle: | 0° |

The initial retroreflectivity value for each panel was used as the initial retroreflectivity for calculating retroreflectivity retention. Subsequent retroreflectivity values were measured on each panel after each exposure increment.

### ASTM G 7

Prior to exposure, initial 60° gloss values and retroreflectance values were measured on each panel as described above. The duration of the outdoor weathering test was 365 days. The outdoor weathering test of the SCOTCHLITE™ 3870 and 3970 retroreflective panels (described below) was conducted in Miami, FL at 26° north latitude with the sample panels affixed to a plywood backing and inclined 5° from the horizontal, whereas the outdoor weathering test of the SCOTCHLTTE™ 690-10U panels (described below) was conducted in Phoenix, AZ at 34° north latitude with the sample panels affixed to a plywood backing and inclined 45° from the horizontal. After a period of 365 days, the outdoor weathering test was terminated and the comparative sample panels were evaluated for retroreflectance and 60° gloss as described above.

### UV-Dosimetry

UV-light intensities and dosages were measured with an EIT Uvicure Power Puck integrating radiometer, available from EIT, Inc., Sterling, VA. Both the peak intensity and the integrated dose were tracked in the UV-A (320-400 nm, peak 370 nm), UV-B (275-320 nm, peak 305 nm), UV-C (230-265 nm, peak 250 nm), and UV-V (375-450 nm, peak 415) bands as reported by the Err spectral response curves. The reported dosages and intensities are the average of at least five measurements though the exposure protocol.

### UV-Curina Protocols

Samples were exposed to UV-light using a RPC UV-processor, available from RPC Industries, Plainfield, IL, equipped with two medium pressure mercury bulbs. The power setting was set on "High" power, and the exposure was conducted in an atmosphere of air.

### Examples

### Polymer Constructions:

SCOTCHLITE™ 3870 refers to a retroreflective construction containing a top layer of a PMMA-type polymer film comprising a copolymer of methyl methacrylate, commercially available from 3M Company, St. Paul, MN.

SCOTCHLITE™ 3970 refers to a retroreflective construction containing a top layer of a PMMA-type polymer film comprising a copolymer of methyl methacrylate, commercially available from 3M Company, St. Paul, MN.

SCOTCHLITE™ 690-10U refers to a retroreflective construction containing a top layer of a polymer film comprising PVC, commercially available from 3M Company, St. Paul, MN.

### Filtering Media:

"COREX® 7058" refers to glass, available from Coming Glass Works, Coming, NY.

### Comparative Examples 1-6

A first set of comparative sample panels of SCOTCHLITE™ 3870, 3970, and 690-1 0U were exposed to UV-light using a RPC UV-processor equipped with two medium-pressure mercury bulbs. The power was set to "High" and the exposure was conducted under an atmosphere of air. The comparative sample panels were repetitively passed eight times through the RPC UV-processor on a web at a speed of 100 ft/min (30.5 m/min). The dose and intensity of UV-light were measured with an ETT Uvicure Power Puck integrating radiometer. For each comparative sample panel exposure, the dose of UV-A light was 295 mJ/cm² per pass at an intensity of 796mW/cm² per pass. The corresponding dose of UV-C light was 23.7 mJ/cm² per pass at an intensity of 54mW/cm² per pass. Thus, the cumulative dose that each panel received was 2360 mJ/cm² of UV-A and 189.6 mJ/cm² of UV-C.

The initial retroreflectance of each panel was measured according to the test method of ASTM E 810. The initial 60° gloss of each panel was measured according to the test method of ASTM D 523. The initial retroreflectance and 60° gloss are defined as 100% of their retained values at 0 hours (HRS) for Comparative Examples 1-3 and 4-6 in Tables 1 and 2, respectively. The comparative sample panels were then subjected to an accelerated UV-light weathering test according to the method of ASTM G 154-00a, Cycle 2. Periodically, the accelerated weathering test was interrupted and the comparative sample panels were evaluated for retroreflectance and 60° gloss as described above. Tables 1 and 2 show the results for retained retroreflectance and retained 60° gloss, respectively, for Comparative Examples 1-6.

**Table 1**

| Comparative Example | Scotchlite™ Panel | Retained Retroreflectivity After Hours of Exposure | | | | | |
|---|---|---|---|---|---|---|---|
| | | 0 HRS | 515 HRS | 1016 HRS | 1525 HRS | 2028 HRS | 2531 HRS |
| 1 | 3870 | 100% | 99% | 97% | 92% | 86% | 82% |
| 2 | 3970 | 100% | 55% | 56% | 50% | 57% | 57% |
| 3 | 690-10U | 100% | 100% | 100% | 97% | 100% | 12% |

**Table 2**

| Comparative Example | Scotchlite™ Panel | Retained 60° Gloss After Hours of Exposure | | | | | |
|---|---|---|---|---|---|---|---|
| | | 0 HRS | 515 HRS | 1016 HRS | 1525 HRS | 2028 HRS | 2531 HRS |
| 4 | 3870 | 100% | 88% | 88% | 82% | 70% | 62% |
| 5 | 3970 | 100% | 79% | 80% | 68% | 65% | 67% |
| 6 | 690-10U | 100% | 95% | 94% | 89% | 95% | 25% |

### Comparative Examples 7-12

A second set of comparative sample panels of Scotchlite™ 3870, 3970, and 690-10U were exposed to UV-light in a manner identical to the method employed for the first set of comparative sample panels. The initial retroreflectance and 60° gloss of each of these comparative sample panels were measured as described above and are defined as 100% of their retained values at 0 Days for Comparative Examples 7-9 and 10-12 in Tables 3 and 4, respectively. These comparative sample panels were then subjected to an outdoor weathering test according to the method of ASTM G 7. Tables 3 and 4 show the results for retained retroreflectance and retained 60° gloss, respectively. In Tables 3 and 4, the weathering location designations are "FL" for the Miami, FL location and "AZ" for the Phoenix, AZ location.

**Table 3**

| Comparative Example | Scotchlite™ Panel | Weathering Location | Retained Retroreflectivity | |
|---|---|---|---|---|
| | | | 0 Days | 365 Days |
| 7 | 3870 | FL | 100% | 80% |
| 8 | 3970 | FL | 100% | 80% |
| 9 | 690-10U | AZ | 100% | 71 % |

**Table 4**

| Comparative Example | Scotchlite™ Panel | Weathering Location | Retained 60° Gloss | |
|---|---|---|---|---|
| | | | 0 Days | 365 Days |
| 10 | 3870 | FL | 100% | 76% |
| 11 | 3970 | FL | 100% | 70% |
| 12 | 690-10U | AZ | 100% | 72% |

### Examples 1-6

A first set of exemplary sample panels of Scotchlite™ 3870, 3970, and 690-10U were exposed to UV-light in a manner similar to the method employed for the first set of comparative sample panels except that the light was first passed through a 2 mm thick Corex™ 7058 glass filter, available from Coming Glass Works, Coming, NY. For each of these exemplary sample panel exposures, the dose per pass, intensity per pass, and cumulative dose of UV-A light was identical to that of the corresponding comparative sample panel exposure. The dose and intensity of the UV-C light were both zero, that is, the light that had passed through the Corex™ 7058 glass did not contain a measurable amount of UV-C light as measured with the EIT Uvicure Power Puck. The initial retroreflectance and the 60° gloss, measured as described above, are defined as 100% of their retained values at 0 HRS and are given in Tables 7 and 8, respectively. These exemplary sample panels were then subjected to an UV-light weathering test according to the method of ASTM G 154-00a, Cycle 2. Periodically, the weathering test was interrupted and the comparative sample panels were evaluated for retained retroreflectance and 60° gloss as described above. Tables 5 and 6 show the results for retained retroreflectance and retained 60° gloss, respectively, for Examples 1-6.

**Table 5**

| Example | Scotchlite™ Panel | Retained Retroreflectivity After Hours of Exposure | | | | | |
|---|---|---|---|---|---|---|---|
| | | 0 HRS | 515 HRS | 1016 HRS | 1525 HRS | 2028 HRS | 2531 HRS |
| 1 | 3870 | 100% | 100% | 100% | 99% | 99% | 100% |
| 2 | 3970 | 100% | 100% | 100% | 100% | 100% | 100% |
| 3 | 690-10U | 100% | 100% | 100% | 100% | 100% | 81% |

**Table 6**

| Example | Scotchlite™ Panel | Retained 60° Gloss After Hours of Exposure | | | | | |
|---|---|---|---|---|---|---|---|
| | | 0 HRS | 515 HRS | 1016 HRS | 1525 HRS | 2028 HRS | 2531 HRS |
| 4 | 3870 | 100% | 98% | 97% | 95% | 95% | 90% |
| 5 | 3970 | 100% | 100% | 100% | 100% | 98% | 100% |
| 6 | 690-10U | 100% | 95% | 91% | 98% | 97% | 83% |

### Examples 7-12

A second set of exemplary sample panels of Scotchlite™ 3870, 3970, and 690-10U were exposed to UV-light in a manner similar to the method employed for the second set of comparative sample panels except that the light was first passed through a 2 mm thick Corex™ 7058 glass filter, available from Coming Glass Works, Coming, NY. For each of these exemplary sample panel exposures, the dose per pass, intensity per pass, and cumulative dose of UV-A light was identical to that of the corresponding comparative sample panel exposure. The dose and intensity of the UV-C light were both zero, that is, the light that had passed through the Corex™ 7058 glass did not contain a measurable amount of UV-C light as measured with the EIT Uvicure Power Puck. The initial retroreflectance and the 60° gloss, measured as described above, are defined as 100% of their retained values at 0 Days and are given in Tables 7 and 8, respectively, for Examples 7-9 and 10-12. These exemplary sample panels were then subjected to an outdoor weathering test according to the method of ASTM G 7 in the manner and location identical to that of the corresponding comparative sample panels. After a period of 365 days, the outdoor weathering test was terminated and the comparative sample panels were evaluated for retained retroreflectance and 60° gloss as described above. Tables 7 and 8 show the results for retained retroreflectance and retained 60° gloss, respectively. In Tables 7 and 8, the weathering location designations are "FL" for the Miami, FL location and "AZ" for the Phoenix, AZ location.

**Table 7**

| Example | Scotchlite™ Panel | Weathering Location | Retained Retroreflectivity | |
|---|---|---|---|---|
| | | | 0 Days | 365 Days |
| 7 | 3870 | FL | 100% | 95% |
| 8 | 3970 | FL | 100% | 100% |
| 9 | 690-10U | AZ | 100% | 85% |

**Table 8**

| Example | Scotchlite™ Panel | Weathering Location | Retained 60° Gloss | |
|---|---|---|---|---|
| | | | 0 Days | 365 Days |
| 10 | 3870 | FL | 100% | 97% |
| 11 | 3970 | FL | 100% | 97% |
| 12 | 690-10U | AZ | 100% | 85% |

## Claims

1. A method of making a weatherable coated polymeric film, said method comprising the steps of:
coating a first outer surface of a polymeric film with a UV-light curable composition to form a polymeric film having one or more uncoated areas and one or more coated areas; and
exposing the first coated outer surface to an effective amount of UV-light and curing the UV-light curable composition, wherein the UV-light is substantially free of wavelengths of 230 nm to 265 nm.

2. The method of claim 1, wherein said UV-light is provided by means of a filter.

3. The method of claim 1, wherein said UV-light is provided substantially free of said wavelengths from a UV-light source.

4. The method of claim 1, wherein the polymer film comprises an acrylic resin.

5. The method of claim 1, wherein the polymer film comprises vinylchloride resin.

6. The method of claim 4, wherein the one or more uncoated areas have a retained 60° gloss value of at least 80% after exposure to an accelerated weathering protocol ASTM G 154-00a, Cycle 2 for about 2000 hours.

7. The method of claim 4, wherein the one or more uncoated areas have a retained 60° gloss value of at least 80% after exposure to an outdoor weathering protocol ASTM G 7 for about 365 days.

8. The method of claim 1, wherein the UV-light curable composition is coated by means of an ink jet printer.

9. The method of claim 1, wherein the UV-light curable composition is coated by means selected from the group consisting of screen printing, flexo printing, spraying, transfer coating, gravure coating, slot coating, curtain coating, lithographic printing, and combinations thereof.

10. A weatherable coated polymeric film made by a process according to any of claims 1 to 9.

## Patentansprüche

1. Verfahren zur Herstellung einer wetterfesten beschichteten polymeren Folie, wobei das Verfahren folgende Schritte umfasst:
Beschichten einer ersten Außenfläche einer polymeren Folie mit einer UV-Licht-härtbaren Zusammensetzung unter Ausbildung einer polymeren Folie mit einem oder mehreren unbeschichteten Bereichen und einem oder mehreren beschichteten Bereichen und
Aussetzen der ersten beschichteten Außenfläche an eine wirksame Menge UV-Licht und Härten der UV-Licht-härtbaren Zusammensetzung, wobei das UV-Licht im Wesentlichen nicht die Wellenlängen 230 nm bis 265 nm aufweist.

2. Verfahren nach Anspruch 1, wobei das UV-Licht mittels eines Filters bereitgestellt wird.

3. Verfahren nach Anspruch 1, wobei das UV-Licht im Wesentlichen ohne die genannten Wellenlängen von einer UV-Lichtquelle bereitgestellt wird.

4. Verfahren nach Anspruch 1, wobei die Polymerfolie ein Acrylharz umfasst.

5. Verfahren nach Anspruch 1, wobei die Polymerfolie ein Vinylchloridharz umfasst.

6. Verfahren nach Anspruch 4, wobei der eine oder mehrere unbeschichtete Bereiche nach Einwirken eines Protokolls zur beschleunigten Verwitterung ASTM G 154-00a, Zyklus 2, über etwa 2000 Stunden einen 60°-Glanzwert von mindestens 80 % bewahrt haben.

7. Verfahren nach Anspruch 4, wobei der eine oder mehrere unbeschichtete Bereiche nach Einwirken eines Protokolls zur Verwitterung im Freien ASTM G 7 über etwa 365 Tage einen 60°-Glanzwert von mindestens 80 % bewahrt haben.

8. Verfahren nach Anspruch 1, wobei die UV-Lichthärtbare Zusammensetzung mittels eines Tintenstrahldruckers beschichtet wird.

9. Verfahren nach Anspruch 1, wobei die UV-Lichthärtbare Zusammensetzung durch Mittel beschichtet wird, ausgewählt aus der Gruppe bestehend aus Siebdruck, Flexodruck, Sprühen, Transferbeschichten, Tiefdruckbeschichten, Spritzdüsenbeschichten, Beschichten mittels Lackvorhang, Flachdruck und Kombinationen davon.

10. Wetterfeste beschichtete polymere Folie, die mittels eines Verfahrens gemäß einem der Ansprüche 1 bis 9 hergestellt ist.

## Revendications

1. Procédé de fabrication d'un film polymère revêtu résistant au vieillissement climatique, ledit procédé comprenant les étapes consistant à :
revêtir une première surface extérieure d'un film polymère avec une composition durcissable par une lumière UV pour former un film polymère possédant une ou plusieurs zones non revêtues et une ou plusieurs zones revêtues ; et
exposer la première surface extérieure revêtue à une quantité efficace de lumière UV et durcir la composition durcissable par une lumière UV, dans lequel la lumière UV est essentiellement dépourvue de longueurs d'onde de 230 nm à 265 nm.

2. Procédé selon la revendication 1, dans lequel ladite lumière UV est obtenue au moyen d'un filtre.

3. Procédé selon la revendication 1, dans lequel ladite lumière UV est obtenue essentiellement dépourvue desdites longueurs d'onde à partir d'une source de lumière UV.

4. Procédé selon la revendication 1, dans lequel le film polymère comprend une résine acrylique.

5. Procédé selon la revendication 1, dans lequel le film polymère comprend une résine de chlorure de vinyle.

6. Procédé selon la revendication 4, dans lequel la ou les zones non revêtues ont un degré de brillance à 60° rémanent d'au moins 80% après exposition à un protocole de vieillissement climatique accéléré ASTM G 154-00a, cycle 2, pendant environ 2000 heures.

7. Procédé selon la revendication 4, dans lequel la ou les zones non revêtues ont un degré de brillance à 60° rémanent d'au moins 80% après exposition à un protocole de vieillissement climatique à l'extérieur ASTM G 7 pendant environ 365 jours.

8. Procédé selon la revendication 1, dans lequel la composition durcissable par une lumière UV est appliquée au moyen d'une imprimante à jet d'encre.

9. Procédé selon la revendication 1, dans lequel la composition durcissable par une lumière UV est appliquée par un moyen choisi dans le groupe constitué par la sérigraphie, la flexographie, la pulvérisation, l'enduction par transfert, le couchage par gravure, l'enduction à plat, l'enduction au rideau, l'impression lithographique, et leurs combinaisons.

10. Film polymère revêtu résistant au vieillissement climatique fabriqué par un procédé selon l'une quelconque des revendications 1 à 9.
